(19) Europäisches Patentamt | European Patent Office | Office européen des brevets

(11) EP 4 703 782 A1

(12) **EUROPEAN PATENT APPLICATION**
published in accordance with Art. 153(4) EPC

(43) Date of publication:
04.03.2026 Bulletin 2026/10

(21) Application number: 24796743.3

(22) Date of filing: 04.04.2024

(51) International Patent Classification (IPC):
*G02B 6/44* $^{(2006.01)}$

(52) Cooperative Patent Classification (CPC):
G02B 6/44

(86) International application number:
PCT/JP2024/013974

(87) International publication number:
WO 2024/224985 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.04.2023 JP 2023070628
24.04.2023 JP 2023070611

(71) Applicant: Sumitomo Electric Industries, Ltd.
Osaka-shi, Osaka 541-0041 (JP)

(72) Inventors:
• SATO Toshihisa
Osaka-shi, Osaka 541-0041 (JP)
• TACHIBANA Kumiko
Osaka-shi, Osaka 541-0041 (JP)
• FUJII Takashi
Osaka-shi, Osaka 541-0041 (JP)

(74) Representative: Müller-Boré & Partner
Patentanwälte PartG mbB
Friedenheimer Brücke 21
80639 München (DE)

(54) **OPTICAL FIBER RIBBON**

(57) An optical fiber ribbon according to one embodiment includes a plurality of optical fibers aligned along a first direction and extending along a second direction intersecting the first direction; and a ribbon material that covers the plurality of optical fibers. In a cross-section orthogonal to the second direction, each of the optical fibers includes a recessed surface portion that is recessed with respect to an imaginary extension plane extending along an outer peripheral surface of the optical fiber.

**Fig.1**

EP 4 703 782 A1

# Description

## Technical Field

The present disclosure relates to an optical fiber ribbon.

Priority is claimed on Japanese Patent Application No. 2023-070611, filed on April 24, 2023, and Japanese Patent Application No. 2023-070628, filed on April 24, 2023, the entire contents of which are incorporated herein by reference.

## Background Art

Patent Literature 1 describes a method for manufacturing an optical fiber ribbon. The optical fiber ribbon includes four multicore fibers and a ribbon material that covers the four multicore fibers. The multicore fiber includes four cores; a cladding that covers the four cores; a coating layer that covers the cladding; and a colored layer that covers the coating layer. In a cross-section orthogonal to a longitudinal direction of the optical fiber ribbon, each of the multicore fibers has a circular shape.

Patent Literature 2 describes an optical fiber ribbon and a method for manufacturing an optical fiber ribbon. The optical fiber ribbon includes a plurality of multicore fibers and an adhesive portion that bonds the plurality of multicore fibers to each other. The cross-section of the multicore fiber has a circular shape, and a plurality of cores are disposed at a predetermined spacing in the multicore fiber. The periphery of the cores is covered with a cladding having a lower refractive index than the cores.

Patent Literature 3 describes a multicore optical fiber ribbon. In the multicore optical fiber ribbon, a plurality of multicore optical fibers disposed in parallel are collectively covered with a common resin. The multicore optical fiber ribbon is manufactured using a connector having a plurality of through-holes. The multicore optical fiber ribbon is manufactured by inserting the multicore fibers into the respective through-holes of the connector.

Patent Literature 4 describes an optical fiber ribbon. The optical fiber ribbon includes a plurality of optical fiber cores disposed in parallel. The optical fiber core is a multicore optical fiber core including a plurality of cores. The optical fiber ribbon includes connecting portions at which the plurality of optical fiber cores adjacent to each other are connected to each other, and non-connecting portions at which the plurality of optical fiber cores adjacent to each other are not connected to each other. The connecting portions and the non-connecting portions are alternately disposed along a longitudinal direction of the optical fiber ribbon.

## Citation List

## Patent Literature

Patent Literature 1: Japanese Unexamined Patent Publication No. 2021-76633
Patent Literature 2: Japanese Unexamined Patent Publication No. 2017-173514
Patent Literature 3: Japanese Unexamined Patent Publication No. 2013-160800
Patent Literature 4: Japanese Unexamined Patent Publication No. 2015-52704

## Summary of Invention

An optical fiber ribbon according to the present disclosure includes a plurality of optical fibers aligned along a first direction and extending along a second direction intersecting the first direction; and a ribbon material that covers the plurality of optical fibers. In a cross-section orthogonal to the second direction, each of the optical fibers includes a recessed surface portion that is recessed with respect to an imaginary extension plane extending along an outer peripheral surface of the optical fiber.

## Brief Description of Drawings

[FIG. 1] FIG. 1 is a cross-sectional view showing an optical fiber ribbon according to one embodiment.
[FIG. 2] FIG. 2 is an enlarged cross-sectional view of an optical fiber of the optical fiber ribbon of FIG. 1.
[FIG. 3] FIG. 3 is a cross-sectional view showing an optical fiber ribbon according to a first modification example.
[FIG. 4] FIG. 4 is an enlarged cross-sectional view of an optical fiber of the optical fiber ribbon of FIG. 3.
[FIG. 5] FIG. 5 is a schematic view showing a manufacturing apparatus for an optical fiber ribbon as one example.
[FIG. 6] FIG. 6 is a view for describing a method for manufacturing the optical fiber of FIG. 3.
[FIG. 7] FIG. 7 is a cross-sectional view showing an optical fiber ribbon according to a third modification example.
[FIG. 8] FIG. 8 is a view showing an optical fiber ribbon according to a fourth modification example.
[FIG. 9] FIG. 9 is a cross-sectional view showing an optical fiber ribbon according to a fifth modification example.
[FIG. 10] FIG. 10 is an enlarged cross-sectional view of an optical fiber of the optical fiber ribbon of FIG. 9.
[FIG. 11] FIG. 11 is a cross-sectional view showing an optical fiber according to a sixth modification example.
[FIG. 12] FIG. 12 is a cross-sectional view showing an optical fiber according to a seventh modification example.

[FIG. 13] FIG. 13 is a schematic view for describing a method for manufacturing the optical fiber of FIG. 12.

[FIG. 14] FIG. 14 is a cross-sectional view showing an optical fiber ribbon according to an eighth modification example.

**Description of Embodiments**

By the way, before a plurality of optical fibers are ribbonized, it may be required to align the disposition of cores among the plurality of optical fibers. However, when the cross-section of the optical fiber taken along a plane orthogonal to a longitudinal direction of the optical fiber has a circular shape, it may be difficult to align the disposition of the cores. For example, in order to align the disposition of the cores, each of the optical fibers may have to be rotated.

An object of the present disclosure is to provide an optical fiber ribbon that enables the disposition of cores in a plurality of optical fibers to be easily aligned.

[Description of embodiment of present disclosure]

Firstly, the contents of an embodiment of the present disclosure will be listed and described. An optical fiber ribbon according to one embodiment includes (1) a plurality of optical fibers aligned along a first direction and extending along a second direction intersecting the first direction; and a ribbon material that covers the plurality of optical fibers. In a cross-section orthogonal to the second direction, each of the optical fibers includes a recessed surface portion that is recessed with respect to an imaginary extension plane extending along an outer peripheral surface of the optical fiber.

The optical fiber ribbon include the plurality of optical fibers aligned along the first direction and extending along the second direction intersecting the first direction. The plurality of optical fibers extend along the second direction intersecting the first direction. In a cross-section orthogonal to the second direction, each of the optical fibers includes a recessed surface portion that is recessed with respect to an imaginary extension plane extending along an outer peripheral surface of the optical fiber. Therefore, by forming the recessed surface portion in the cross-section of each of the optical fibers, it is made easy to align the rotation angles of the optical fibers based on the recessed surface portion in the cross-section when the optical fibers are ribbonized. As a result, when the optical fibers are ribbonized, the rotation angles of the optical fibers can be easily aligned, so that the disposition of the cores of each of the optical fibers can be easily aligned.

(2) In (1) above, the optical fiber may include a primary resin layer and a secondary resin layer that covers the primary resin layer, and the recessed surface portion may be is formed in the secondary resin layer. In this case, the recessed surface portion is formed in the secondary resin layer, and is not formed in the primary resin layer located inside the secondary resin layer. Since the recessed surface portion is not formed in the primary resin layer, the influence of the recessed surface portion on the transmission characteristics of light passing through the cores can be suppressed.

(3) In (2) above, the optical fiber may include a colored resin layer that covers the secondary resin layer, and the recessed surface portion may be formed in the colored resin layer and the secondary resin layer.

(4) In any one of (1) to (3) above, in the cross-section, an outer shape of the optical fiber which includes the extension plane may be a circular shape, and when the number of the optical fibers is N, a diameter of a circular portion of the optical fiber in the cross-section is A1, and a length of the optical fiber ribbon in the first direction in the cross-section is W1 (N, A1, and W1 are positive real numbers), $0.90 \times N \times A1 \le W1 \le 1.20 \times N \times A1$ may be satisfied. In this case, the influence on the transmission characteristics of light passing through the cores can be suppressed, and the excessive expansion of the optical fiber ribbon can be suppressed.

(5) In any one of (1) to (4) above, the optical fiber may be a multicore fiber. In this case, the disposition of the cores of each of the multicore fibers can be easily aligned.

(6) In any one of (1) to (5) above, the plurality of optical fibers may be in contact with each other. In the cross-section orthogonal to the second direction, the optical fiber may have an oval shape. In the cross-section, an angle of a major axis of each of the optical fibers with respect to the first direction may be equal to or greater than 0° and less than 90°. The optical fiber ribbon include the plurality of optical fibers aligned along the first direction and extending along the second direction intersecting the first direction, and the plurality of optical fibers are in contact with each other. The plurality of optical fibers extend along the second direction intersecting the first direction. In the cross-section orthogonal to the second direction, the optical fiber has an oval shape, and the angle of the major axis of each of the optical fibers with respect to the first direction is equal to or greater than 0° and less than 90°. The cross-section of each of the plurality of optical fibers in contact with each other has an oval shape, and the angle of the major axis of each of the optical fibers with respect to the first direction in the cross-section is equal to or greater than 0° and less than 90°. Therefore, since the cross-section of each of the optical fibers has an oval shape, it is easy to align the rotation angles of the optical fibers based on the major axis of the cross-section when the optical fibers are ribbonized. As a result, when the optical fibers are ribbonized, the rotation angles of the optical fibers can be easily aligned, so that the disposition of the cores of each of the optical fibers can be easily aligned.

(7) In any one of (1) to (6) above, when the number of the optical fibers is N, a maximum value of a diameter of the optical fiber in the cross-section is A2, and a length of the optical fiber ribbon in the first direction in the cross-section is W2 (N, A2, and W2 are positive real numbers),

[Equation 1]

$$\left(\tfrac{\sqrt{3}}{2}\right) \times N \times A2 \le W2 \le 1.2 \times N \times A2$$

may be satisfied. In this case, since the rotation angles of the optical fibers with respect to the first direction can be appropriately aligned, the disposition of the cores of each of the optical fibers can be easily aligned.

[Details of embodiment of present disclosure]

Hereinafter, a specific example of an optical fiber ribbon according to an embodiment of the present disclosure will be described with reference to the drawings. Incidentally, the present disclosure is not limited to the example to be described below, and is intended to include all modifications defined in the claims and within the scope of equivalents of the claims. In the description of the drawings, the same or corresponding elements are denoted by the same reference signs, and duplicate descriptions will be omitted as appropriate. The drawings may be partially depicted in a simplified or exaggerated manner for ease of understanding, and dimensional ratios and the like are not limited to those shown in the drawings.

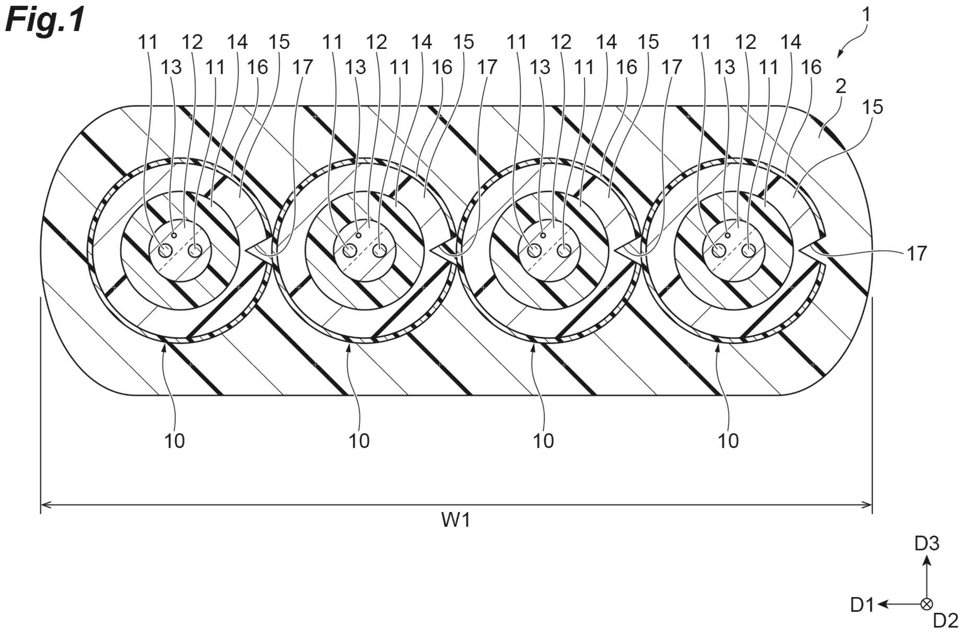

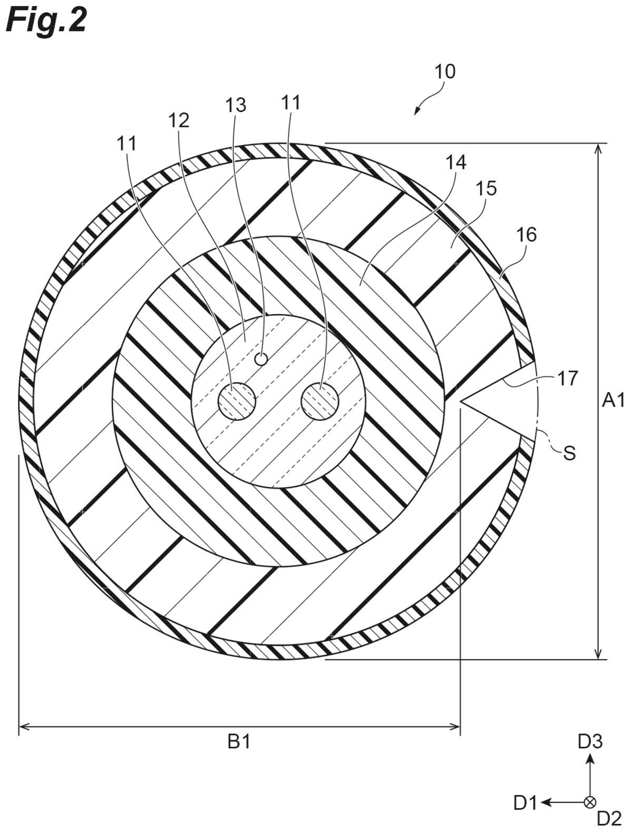

FIG. 1 is a cross-sectional view showing an optical fiber ribbon according to the present embodiment. FIG. 2 is a cross-sectional view of an optical fiber of the optical fiber ribbon of FIG. 1. As shown in FIGS. 1 and 2, an optical fiber ribbon 1 includes a plurality of optical fibers 10 and a ribbon material 2 that covers the plurality of optical fibers 10.

The plurality of optical fibers 10 are aligned along a first direction D1, and extend along a second direction D2 intersecting the first direction D1. The first direction D1 is a width direction of the optical fiber ribbon 1, and the second direction D2 is a longitudinal direction (extending direction) of the optical fiber ribbon 1. The optical fiber ribbon 1 has a thickness in a third direction D3 intersecting both the first direction D1 and the second direction D2. FIG. 1 shows a cross-section of the optical fiber ribbon 1 taken along a plane orthogonal to the second direction D2. FIG. 2 is an enlarged cross-sectional view of the optical fiber 10 of the optical fiber ribbon 1 of FIG. 1. The cross-section taken along a plane orthogonal to the second direction D2 may be simply referred to as a cross-section below. In addition, the cross-sectional shape when taken along a plane orthogonal to the second direction D2 may be simply referred to as a cross-sectional shape below.

The optical fiber 10 is a light-guiding optical transmission medium that transmits light introduced into the optical fiber 10. As one example, the optical fiber 10 is made of silica ($SiO_2$) glass serving as the base material (main component). The optical fiber 10 includes a core 11 and a cladding 12 that covers the core 11. For example, the core 11 and the cladding 12 constitute a glass fiber.

In the present embodiment, the optical fiber 10 is a multicore fiber. For example, the optical fiber 10 includes a plurality of the cores 11. For example, the number of the cores 11 is two. However, the number of the cores 11 is not particularly limited. The optical fiber may be a single-core fiber. The core 11 is made of, for example, quasi-$SiO_2$ glass or $SiO_2$ glass containing germanium dioxide ($GeO_2$) or fluorine element. For example, the plurality of cores 11 include a first core 11b and a second core 11c. The cladding 12 is provided in a region surrounding the cores 11.

The cladding 12 has a refractive index lower than the refractive index of the core 11. The cladding 12 is made of, for example, pure $SiO_2$ glass or $SiO_2$ glass doped with fluorine element. The optical fiber 10 includes a marker 13. The marker 13 is covered with the cladding 12. The marker 13 is provided to distinguish between the first core 11b and the second core 11c. From the position of the marker 13 and the position of each of the cores 11 in a cross-section, it is recognized which of the plurality of cores 11 is the first core 11b or the second core 11c.

The optical fiber 10 includes a resin coating layer that covers the cladding 12. The resin coating layer is, for example, an ultraviolet-curable resin layer that covers the cladding 12. The resin coating layer includes a primary resin layer 14 that covers an outer periphery of the cladding 12; a secondary resin layer 15 that covers an outer periphery of the primary resin layer 14; and a colored resin layer 16 that covers an outer periphery of the secondary resin layer 15. The primary resin layer 14 is in contact with an outer peripheral surface of the cladding 12, and covers, for example, the entirety of the cladding 12. The secondary resin layer 15 is in contact with an outer peripheral surface of the primary resin layer 14, and covers, for example, the entirety of the primary resin layer 14. The colored resin layer 16 is in contact with an outer peripheral surface of the secondary resin layer 15, and covers, for example, the entirety of the secondary resin layer 15.

The primary resin layer 14 is formed from, for example, a resin composition for primary resin. For example, the primary resin layer 14 is formed by curing a resin composition containing urethane (meth)acrylate, a monomer, a photopolymerization initiator, and a silane coupling agent. The secondary resin layer 15 is formed from a resin composition for secondary resin composition. For example, the secondary resin layer 15 is formed by curing a resin composition containing urethane (meth) acrylate, a monomer, and a photopolymerization initiator. For example, the secondary resin layer 15 has higher elasticity than the primary resin layer 14, and the primary resin layer 14 is harder than the secondary resin layer 15.

The colored resin layer 16 constitutes an outermost layer of the resin coating layer of the optical fiber 10. The colored resin layer 16 is made of, for example, a cured product of an ultraviolet-curable resin composition containing coloring ink (pigment or dye). The resin composition contains, for example, a urethane (meth)acrylate oligomer, a monomer, and a photopolymerization initiator. As the monomer, for example, a monofunctional monomer having one polymerizable group or a polyfunctional monomer having two or more polymerizable groups is used. The monomer may be a mixture of two or more types of monomers. As the photopolymerization initiator, a radical photopolymerization initiator can be used. Since the optical fiber 10 includes the colored resin layer 16, the optical fiber 10 is a so-called colored optical fiber.

The plurality of optical fibers 10 are covered with the ribbon material 2. For example, the cross-section of the ribbon material 2 has an oval shape. The ribbon material 2 is made of, for example, a ribbon resin. For example, from the viewpoint of preventing damage to the optical fiber and ease of separation, the ribbon resin may contain a thermosetting resin such as silicone resin, epoxy resin, or urethane resin, or an ultraviolet-curable resin such as epoxy acrylate, urethane acrylate, or polyester acrylate.

For example, the plurality of optical fibers 10 are in contact with each other inside the ribbon material 2. However, the plurality of optical fibers 10 may not be in contact with each other. In a cross-section orthogonal to the second direction D2, the outer shape of the optical fiber 10 is a circular shape. In the cross-section, the optical fiber 10 includes a recessed surface portion 17 that is recessed with respect to an imaginary extension plane S extending in an arc shape along an outer peripheral surface of the optical fiber 10. For example, the recessed surface portion 17 is formed in the colored resin layer 16 and the secondary resin layer 15, and does not reach the primary resin layer 14. Since the recessed surface portion 17 does not reach the primary resin layer 14, the influence of the recessed surface portion 17 on the transmission characteristics of light passing through the cores 11 can be suppressed.

For example, in a cross-section orthogonal to the second direction D2, the portion of the optical fiber 10 other than the recessed surface portion 17 (the portion including the extension plane S of the optical fiber 10) has a perfect circular shape. The "perfect circular shape" includes not only a perfect circle but also a circular shape that visually appears to be a perfect circle but is not, strictly speaking, a perfect circle. That is, the "perfect circular shape" also includes a circular shape in which a length in one direction is slightly longer than a length in a direction orthogonal to the one direction. The "circular shape" includes not only a perfect circular shape but also a circular shape in which a length in one direction is longer than a length in a direction orthogonal to the one direction.

For example, when the maximum value of the diameter of the optical fiber 10 is A1, the number of the optical fibers 10 is N, and the width of the optical fiber ribbon 1 is W1, $0.90 \times N \times A1 \leq W1 \leq 1.20 \times N \times A1$ is satisfied. When W1 is greater than or equal to $0.90 \times N \times A1$, the depth of the recessed surface portion 17 can be appropriately set to the extent that the recessed surface portion 17 does not reach the primary resin layer 14. When W1 is less than or equal to $1.20 \times N \times A1$, the excessive expansion of the optical fiber ribbon 1 can be suppressed. The recessed surface portion 17 is recessed, for example, in a V-shape in the colored resin layer 16 and the secondary resin layer 15. However, the shape of the recessed surface portion 17 may be a shape other than a V-shape. The shape of the recessed surface portion 17 may be, for example, a U-shape or a rectangular shape, and is not particularly limited.

For example, when the diameter of a circular portion of the optical fiber 10 in a cross-section is A1 and the minimum value of the diameter of the recessed surface portion 17 in a cross-section is B1 (A1 and B1 are positive real numbers), $0.84 \leq (B1/A1) \leq 0.96$ is satisfied. By setting $(B1/A1)$ to 0.96 or less, the recessed surface portion 17 is made appropriately large, so that the recessed surface portion 17 is easily recognized. When $(B1/A1)$ is 0.84 or more, the depth of the recessed surface portion 17 can be set to an appropriate depth such that the recessed surface portion 17 does not reach the primary resin layer 14.

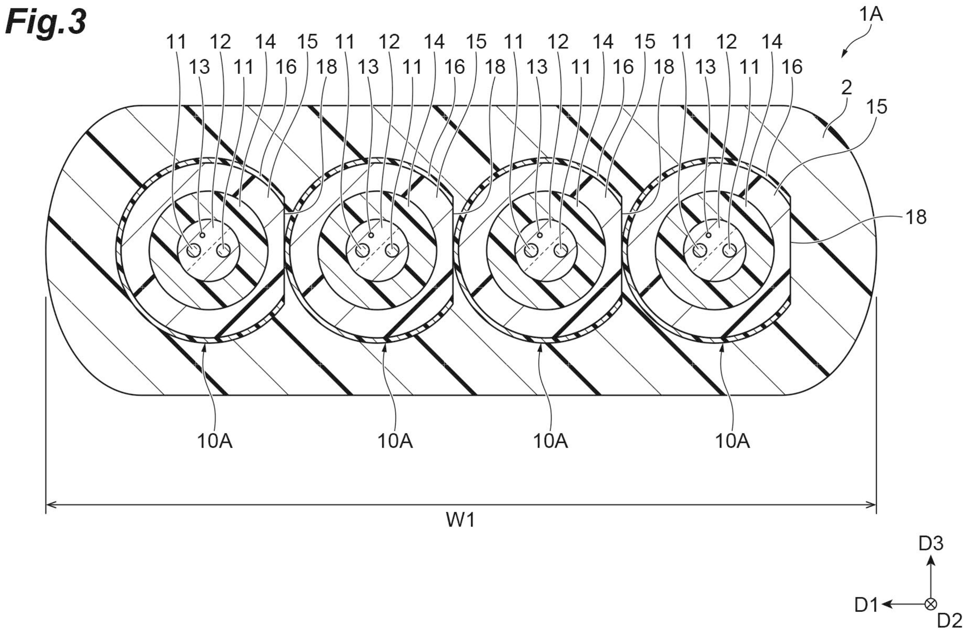

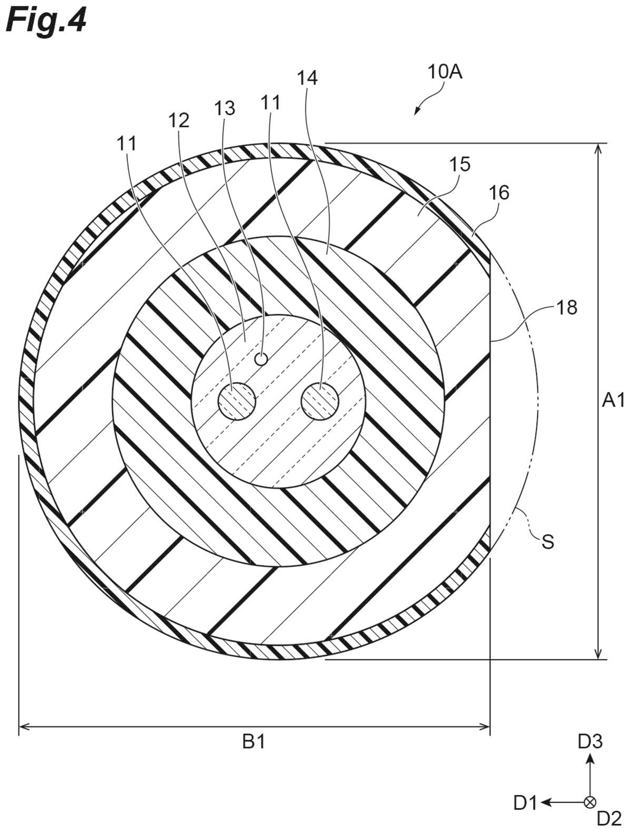

Next, an optical fiber ribbon 1A and an optical fiber 10A according to a first modification example will be described with reference to FIGS. 3 and 4. The optical fiber ribbon 1A includes a recessed surface portion 18 that is different in shape from the recessed surface portion 17. Similarly to the recessed surface portion 17, the recessed surface portion 18 is formed in the colored resin layer 16 and the secondary resin layer 15, and is not formed in the primary resin layer 14. In the optical fiber 10A as well, when the maximum value of the diameter of the optical fiber 10A is A1, the number of the optical fibers 10A is N, and the width of the optical fiber ribbon 1A is W1, $0.90 \times N \times A1 \leq W1 \leq 1.20 \times N \times A1$ is satisfied.

The recessed surface portion 18 is, for example, a flat surface. However, the shape of the recessed surface portion 18 may be a shape other than a flat surface. The recessed surface portion 18 may be a recessed surface recessed toward the primary resin layer 14, or may be a protruding surface bulging away from the primary resin layer 14. In the optical fiber 10A as well, when the diameter of a circular portion of the optical fiber 10A in a cross-section is A1 and the minimum value of the diameter of the recessed surface portion 18 in a cross-section is B1 (A1 and B1 are positive real numbers), $0.84 \leq (B1/A1) \leq 0.96$ is satisfied.

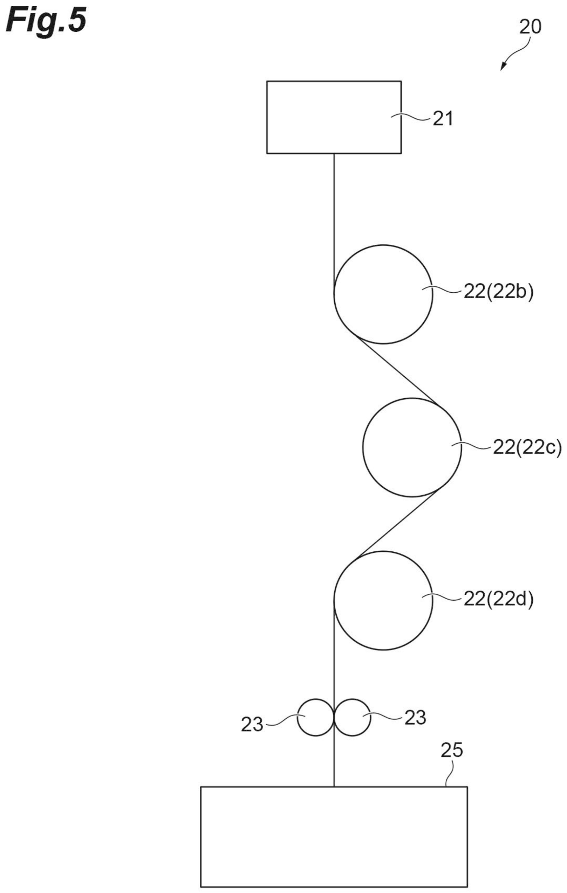

Subsequently, an example of a method for manufacturing the optical fiber ribbon 1 will be described with reference to FIG. 5. FIG. 5 is a schematic view showing a manufacturing apparatus for the optical fiber ribbon 1. As shown in FIG. 5, a manufacturing apparatus 20 includes, for example, a supply device 21, a guide roller 22, a pair of pressure rollers 23, and a coating device 25.

The supply device 21 includes, for example, N (four in the present embodiment) reels corresponding to the number of fibers of the optical fiber ribbon 1, and N dancer rollers. The plurality of optical fibers 10 are wound around the respective reels, and the optical fibers 10 are unwound from the respective reels. The optical fibers 10 unwound from the reels are tensioned by the dancer rollers, and the tensioned optical fibers 10 are drawn out from the supply device 21 in a state where the tensioned optical fibers 10 are aligned on a single arrangement plane. The plurality of optical fibers 10 that are drawn out are transported by the guide roller 22. In the example of FIG. 5, the plurality of optical fibers 10 are aligned in a direction orthogonal to the drawing sheet of FIG. 5.

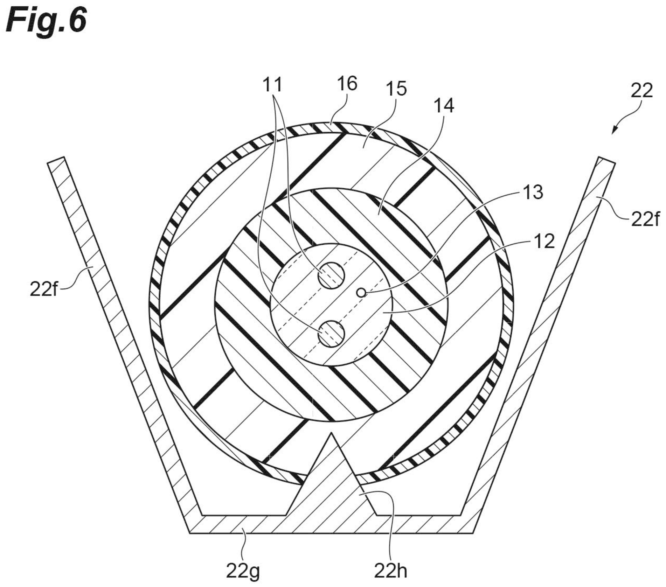

For example, as shown in FIG. 6, the recessed surface portion 17 is to be formed at an outer peripheral portion of the guide roller 22. In this case, the guide roller 22 includes a bottom portion 22g and a blade portion 22h in an optical fiber transport space defined by a pair of extending portions 22f extending obliquely upward with respect to both ends of the bottom portion 22g in a width direction. For example, the blade portion 22h protrudes in a V-shape from the bottom portion 22g. When the optical fiber 10 passes over the outer peripheral portion of the guide roller 22, the blade portion 22h makes a cutout in the secondary resin layer 15 to form the recessed surface portion 17. Incidentally, when the guide roller 22 includes a blade portion that is different in shape from the blade portion 22h, the blade portion can cut the secondary resin layer 15 to form the recessed surface portion 18.

As shown in FIG. 5, the manufacturing apparatus 20 includes, for example, a plurality of the guide rollers 22, and the plurality of guide rollers 22 include a first guide roller 22b, a second guide roller 22c, and a third guide roller 22d. The plurality of optical fibers 10 that are aligned pass through the first guide 22b, the second guide roller 22c, and the third guide roller 22d, and enters between the pair of pressure rollers 23. The plurality of optical fibers 10 that have passed between the pair of pressure rollers 23 are sent to the coating device 25.

The coating device 25 includes a die. The die has, for example, holes through which N (four in the present embodiment) optical fibers 10 pass. In the coating device 25, a ribbon resin constituting the ribbon material 2 is supplied to the plurality of optical fibers 10, and the plurality of optical fibers 10 are ribbonized. At this time, the rotation angles of the plurality of optical fibers 10 are aligned, and the ribbon resin is applied to the plurality of optical fibers 10, the rotation angles of which are aligned. The "rotation angle" indicates the orientation of the optical fiber 10 in a cross-section, and indicates, for example, the angle of a line segment, which connects the center of the cross-section of the optical fiber 10 and the marker 13, with respect to the first direction D1. The plurality of optical fibers 10 to which the ribbon resin is applied is sent to, for example, an ultraviolet irradiation device. The ultraviolet irradiation device irradiates the ribbon resin applied to the plurality of optical fibers 10 with ultraviolet light to cure the ribbon resin. After the cured ribbon resin becomes the ribbon material 2, the optical fiber ribbon 1 is completed. Incidentally, the optical fiber ribbon 1A according to the modification example is also completed through the same steps as described above.

Next, actions and effects obtained from the optical fiber ribbons 1 and 1A according to the present embodiment will be described. The optical fiber ribbons 1 and 1A include the plurality of optical fibers 10 and 10A aligned along the first direction D1 and extending along the second direction D2 intersecting the first direction D1. The plurality of optical fibers 10 and 10A extend along the second direction D2 intersecting the first direction D1. In a cross-section orthogonal to the second direction D2, the optical fibers 10 and 10A include the recessed surface portions 17 and 18 that are recessed with respect to the imaginary extension plane S extending along the outer peripheral surface of each of the optical fibers 10 and 10A. Therefore, by forming the recessed surface portions 17 and 18 in the cross-sections of the optical fibers 10 and 10A, it is made easy to align the rotation angles of the optical fibers 10 and 10A based on the recessed surface portions 17 and 18 in the cross-sections when the optical fibers 10 and 10A are ribbonized. As a result, when the optical fibers 10 and 10A are ribbonized, the rotation angles of the optical fibers 10 and 10A can be easily aligned, so that the disposition of the cores 11 of each of the optical fibers 10 and 10A can be easily aligned.

As described above, the optical fibers 10 and 10A may include the primary resin layer 14 and the secondary resin layer 15 that covers the primary resin layer 14, and the recessed surface portions 17 and 18 are formed in the secondary resin layer 15. In this case, the recessed surface portions 17 and 18 are formed in the secondary resin layer 15, and are not formed in the primary resin layer 14 located inside the secondary resin layer 15. Since the recessed surface portions 17 and 18 are not formed in the primary resin layer 14, the influence of the recessed surface portions 17 and 18 on the transmission characteristics of light passing through the cores 11 can be suppressed. Furthermore, as described above, the optical fibers 10 and 10A may include the colored resin layer 16 that covers the secondary resin layer 15, and the recessed surface portions 17 and 18 may be formed in the colored resin layer 16 and the secondary resin layer 15.

As described above, in the cross-section, the outer shape of the optical fibers 10 and 10A which includes the extension plane S is a circular shape, and when the number of the optical fibers 10 and 10A is N, the diameter of the circular portions of the optical fibers 10 and 10A in the cross-section is A1, and the length of the optical fiber ribbons 1 and 1A in the first direction D1 in the cross-section is W1 (N, A1, and W1 are positive real numbers), $0.90 \times N \times A1 \leq W1 \leq 1.20 \times N \times A1$ may be

satisfied. In this case, the influence on the transmission characteristics of light passing through the cores 11 can be suppressed, and the excessive expansion of the optical fiber ribbons 1 and 1A can be suppressed.

As described above, the optical fibers 10 and 10A may be multicore fibers. In this case, the disposition of the cores 11 of each of the multicore fibers can be easily aligned.

In the optical fiber according to the present disclosure, various methods can be used as the method for forming the recessed surface portion. For example, the recessed surface portion may be formed by disposing a blade portion in a coloring line forming a colored resin layer in the optical fiber and passing the optical fiber over the blade portion in the coloring line. In addition, a blade portion may be disposed in a ribbon manufacturing line for the optical fiber ribbon, and the recessed surface portion may be formed by the blade portion before the ribbon resin for the ribbon material is applied. Regarding where to form the recessed surface portion with respect to the positions of the cores, for example, the positions of the cores may be checked by a camera before coloring, and the recessed surface portion may be formed at a certain location with respect to the checked positions of the cores.

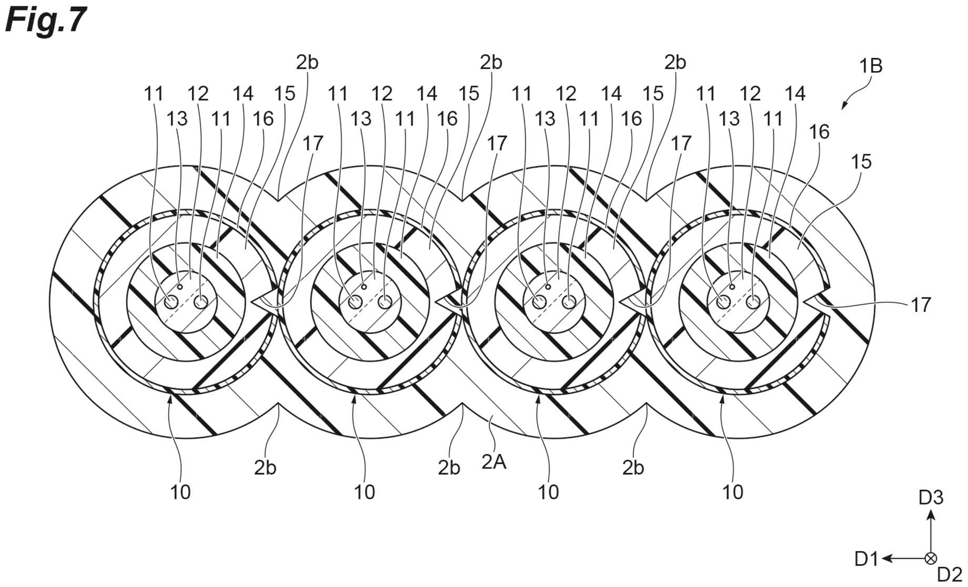

In the embodiment described above, the optical fiber ribbon 1 in which the cross-section of the ribbon material 2 has an oval shape has been described. However, as in a ribbon material 2A of an optical fiber ribbon 1B according to a third modification example of FIG. 7, the ribbon material may include a plurality of recesses 2b aligned along the second direction D2 and extending along the second direction D2. In the optical fiber ribbon 1B including the ribbon material 2A, the optical fibers 10 can be easily separated (for example, separated into individual fibers) along the recesses 2b.

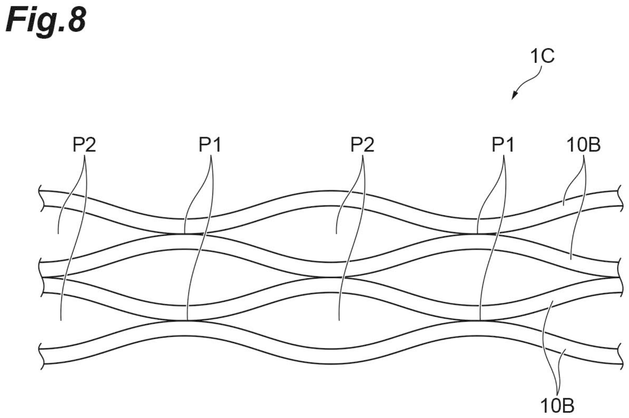

Furthermore, as in an optical fiber ribbon 1C according to a fourth modification example of FIG. 8, the optical fiber ribbon according to the present disclosure may be an intermittent ribbon. The optical fiber ribbon 1C that is an intermittent ribbon includes connecting portions P1 at which a plurality of the optical fibers 10 adjacent to each other are connected to each other, and non-connecting portions P2 at which the plurality of optical fibers 10 adjacent to each other are not connected to each other. The connecting portions P1 and the non-connecting portions P2 are alternately aligned along an extending direction of the optical fiber ribbon 1B. In this way, the form of the optical fibers in the optical fiber ribbon according to the present disclosure can be changed as appropriate.

In the embodiment and the first modification example described above, the optical fibers 10 and 10A including the colored resin layer 16 have been described. However, the optical fiber may not include the colored resin layer. In this case, the optical fiber ribbon 1 described above includes an optical fiber includes an optical fiber in which the recessed surface portion 17 is formed in the secondary resin layer 15, and the optical fiber ribbon 1A described above includes an optical fiber in which the recessed surface portion 18 is formed in the secondary resin layer 15.

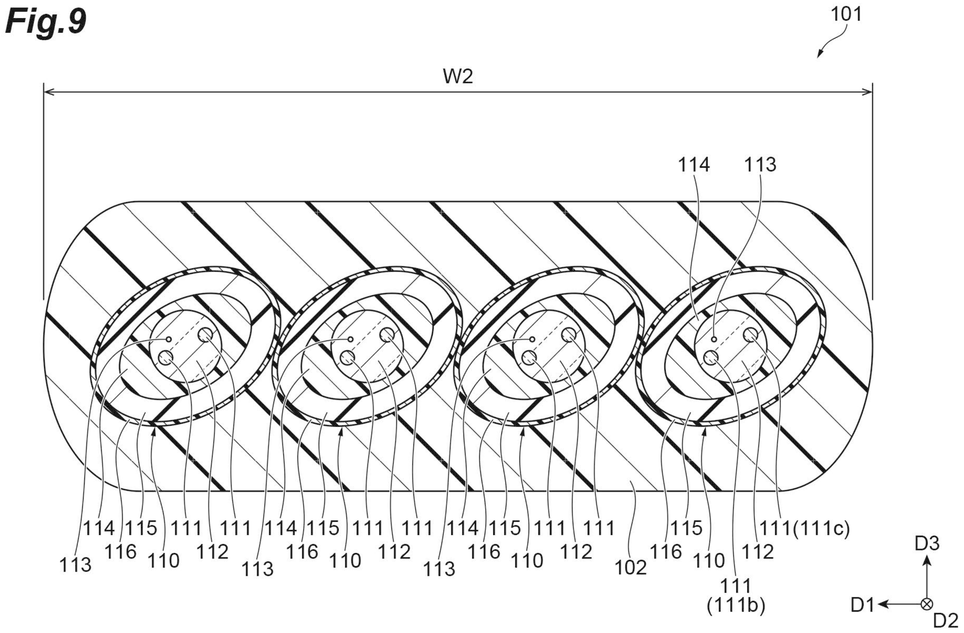

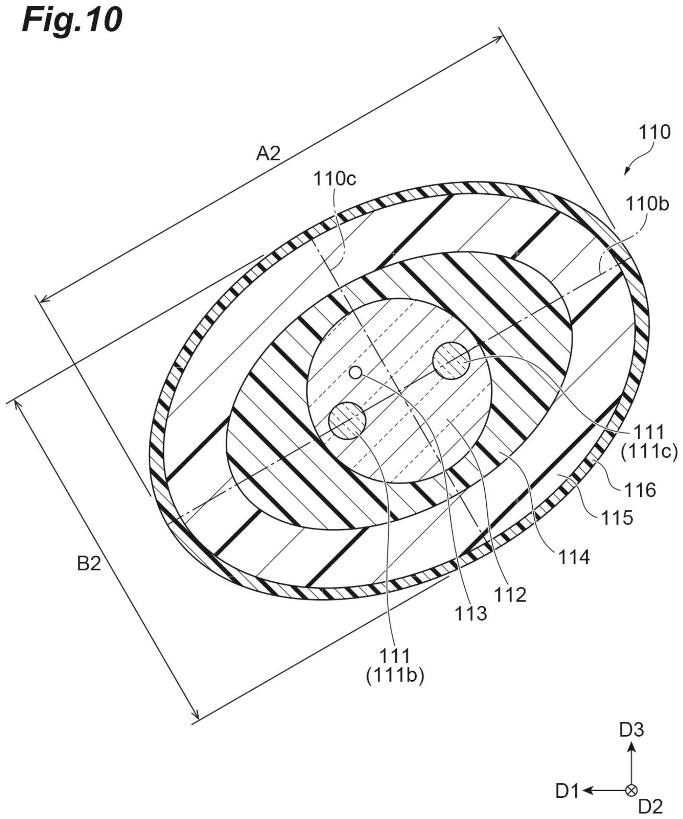

FIG. 9 is a cross-sectional view showing an optical fiber ribbon according to a fifth modification example. FIG. 10 is a cross-sectional view of an optical fiber of the optical fiber ribbon of FIG. 9. As shown in FIGS. 9 and 10, an optical fiber ribbon 101 includes a plurality of optical fibers 110 and a ribbon material 102 that covers the plurality of optical fibers 110.

The plurality of optical fibers 110 are aligned along the first direction D1, and extend along the second direction D2 intersecting the first direction D1. The first direction D1 is a width direction of the optical fiber ribbon 101, and the second direction D2 is a longitudinal direction (extending direction) of the optical fiber ribbon 101. The optical fiber ribbon 101 has a thickness in the third direction D3 intersecting both the first direction D1 and the second direction D2. FIG. 9 shows a cross-section of the optical fiber ribbon 101 taken along a plane orthogonal to the second direction D2. FIG. 10 is an enlarged cross-sectional view of the optical fiber 110 of the optical fiber ribbon 101 of FIG. 9.

The optical fiber 110 is a light-guiding optical transmission medium that transmits light introduced into the optical fiber 110. As one example, the optical fiber 110 is made of silica ($SiO_2$) glass serving as the base material (main component). The optical fiber 110 includes a core 111 and a cladding 112 that covers the core 111. For example, the core 111 and the cladding 112 constitute a glass fiber.

The optical fiber 110 is a multicore fiber. For example, the optical fiber 110 includes a plurality of the cores 111. For example, the number of the cores 111 is two. However, the number of the cores 111 is not particularly limited. The core 111 is made of, for example, pure $SiO_2$ glass or $SiO_2$ glass containing germanium dioxide ($GeO_2$) or fluorine element. For example, the plurality of cores 111 include a first core 111b and a second core 111c. The cladding 112 is provided in a region surrounding the cores 111.

The cladding 112 has a refractive index lower than the refractive index of the core 111. The cladding 112 is made of, for example, pure $SiO_2$ glass or $SiO_2$ glass doped with fluorine element. The optical fiber 110 includes a marker 113. The marker 113 is covered with the cladding 112. The marker 113 is provided to distinguish between the first core 111b and the second core 111c. From the position of the marker 113 in a cross-section and the position of each of the cores 111, it is recognized which of the plurality of cores 111 is the first core 111b or the second core 111c.

The optical fiber 110 includes a resin coating layer that covers the cladding 112. The resin coating layer is, for example, an ultraviolet-curable resin layer that covers the cladding 112. The resin coating layer includes a primary resin layer 114 that covers an outer periphery of the cladding 112; a secondary resin layer 115 that covers an outer periphery of the primary resin layer 114; and a colored resin layer 116 that covers an outer periphery of the secondary resin layer 115. The primary resin layer 114 is in contact with an outer peripheral surface of the cladding 112, and covers, for example, the entirety of the cladding 112. The secondary resin layer 115 is in contact with an outer peripheral surface of the primary resin layer 114, and covers, for example, the entirety of the primary resin layer 114. The colored resin layer 116 is in contact with an outer peripheral surface of the secondary resin layer 115, and covers, for example, the entirety of the secondary resin layer 115.

The primary resin layer 114 is formed from, for example, a resin composition for primary resin. For example, the primary resin layer 114 is formed by curing a resin composition containing urethane (meth)acrylate, a monomer, a photopolymerization initiator, and a silane coupling agent. The secondary resin layer 115 is formed from a resin composition for secondary resin composition. For example, the secondary resin layer 115 is formed by curing a resin composition containing urethane (meth)acrylate, a monomer, and a photopolymerization initiator. For example, the secondary resin layer 115 has higher elasticity than the primary resin layer 114, and the primary resin layer 114 is harder than the secondary resin layer 115.

The colored resin layer 116 constitutes an outermost layer of the resin coating layer of the optical fiber 110. The colored resin layer 116 is made of, for example, a cured product of an ultraviolet-curable resin composition containing coloring ink (pigment or dye). Since the optical fiber 110 includes the colored resin layer 116, the optical fiber 110 is a so-called colored optical fiber.

The plurality of optical fibers 110 are covered with the ribbon material 102. For example, the cross-section of the ribbon material 102 has an oval shape. The ribbon material 102 is made of, for example, a ribbon resin. The plurality of optical fibers 110 are in contact with each other inside the ribbon material 102. In a cross-section orthogonal to the second direction D2, the optical fiber 110 has an oval shape. The "oval shape" refers to a circular shape in which a length in one direction is longer than a length in a direction orthogonal to the one direction. The "oval shape" may be an elliptical shape, a rounded rectangular shape, or an egg shape. Hereinafter, an example in which the cross-sectional shape of the optical fiber 110 is an elliptical shape will be described.

The cross-section of the optical fiber 110 has a major axis 110b and a minor axis 110c. Each of the optical fibers 110 is disposed such that the major axis 110b is inclined with respect to the first direction D1 inside the ribbon material 102. That is, the major axis 110b of each of the optical fibers 110 is inclined with respect to the first direction D1 that is a direction in which the optical fibers 110 are aligned. The angle of the major axis 110b with respect to the first direction D1 is, for example, 30° or less.

For example, when the maximum value of the diameter of the optical fiber 110 is A2 and a diameter orthogonal thereto is B2, $0.90 \leq (B2/A2) \leq 0.98$ is satisfied. A2 is the length of the major axis 110b in the cross-section of the optical fiber 110, and B2 is the length of the minor axis 110c in the cross-section of the optical fiber 110.

For example, when the maximum value of the diameter of the optical fiber 110 is A2, the number of the optical fibers 110 is N, and the width of the optical fiber ribbon 1 is W2,

[Equation 1]

$$\left(\tfrac{\sqrt{3}}{2}\right) \times N \times A2 \leq W2 \leq 1.2 \times N \times A2$$

is satisfied. In this case, the angle of the major axis 110b with respect to the first direction D1 is 30° or less. In addition, by setting W2 to 1.2 x N x A2 or less, the excessive expansion of the optical fiber ribbon 101 can be suppressed.

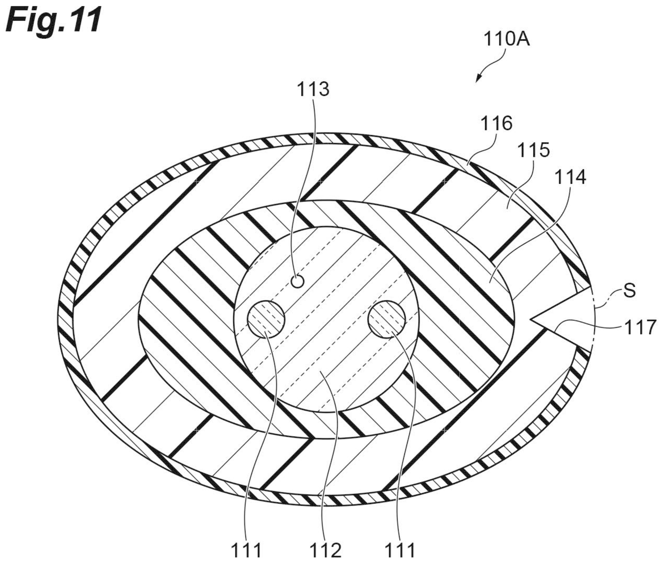

Next, an optical fiber 110A according to a sixth modification example will be described with reference to FIG. 11. The optical fiber ribbon 101 described above may include the optical fiber 110A instead of the optical fiber 110. The optical fiber 110A differs from the optical fiber 110 in that the optical fiber 110A includes a recessed surface portion 117. The recessed surface portion 117 is a portion that is recessed with respect to the imaginary extension plane S extending along an outer peripheral surface of the optical fiber 110A in the cross-section of the optical fiber 110A.

For example, the recessed surface portion 117 is formed in the colored resin layer 116 and the secondary resin layer 115, and does not reach the primary resin layer 114. Since the recessed surface portion 117 does not reach the primary resin layer 114, the influence of the recessed surface portion 117 on the transmission characteristics of light passing through the cores 111 can be suppressed. The recessed surface portion 117 is recessed, for example, in a V-shape in the colored resin layer 116 and the secondary resin layer 115. However, the shape of the recessed surface portion 117 may be a shape other than a V-shape. The shape of the recessed surface portion 117 may be, for example, a U-shape or a rectangular shape, and is not particularly limited.

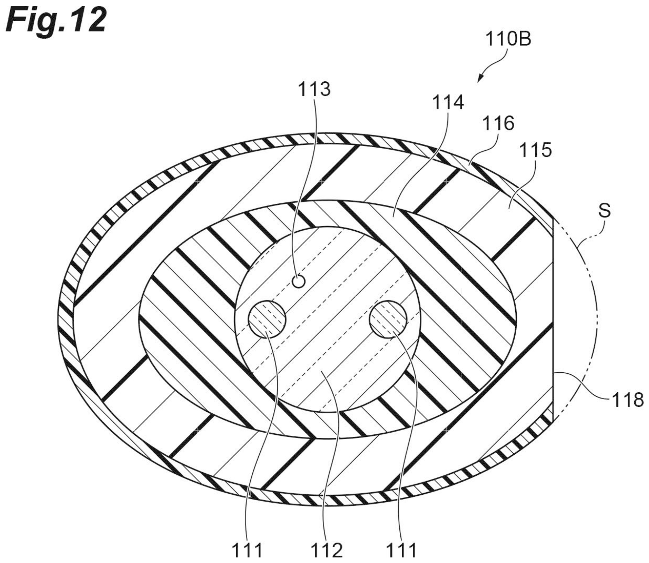

FIG. 12 is a cross-sectional view showing an optical fiber 110B according to a seventh modification example. The optical fiber ribbon 101 described above may include the optical fiber 110B instead of the optical fiber 110. The optical fiber 110B includes a recessed surface portion 118 that is different in shape from the recessed surface portion 117. Similarly to the recessed surface portion 117, the recessed surface portion 118 is recessed with respect to the imaginary extension plane S.

For example, the recessed surface portion 118 is formed in the colored resin layer 116 and the secondary resin layer 115, and is not formed in the primary resin layer 114. Accordingly, similarly to the case of the recessed surface portion 117, the influence of the recessed surface portion 118 on the transmission characteristics of light passing through the cores 111 can be suppressed. The recessed surface portion 118 is, for example, a flat surface. However, the shape of the recessed surface portion 118 may be a shape other than a flat surface. The recessed surface portion 118 may be a recessed surface recessed toward the primary resin layer 114, or may be a protruding surface bulging away from the primary resin layer 114, and is not particularly limited.

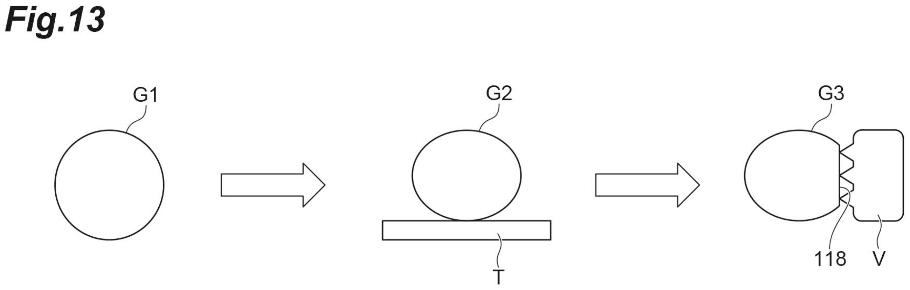

An example of a method for forming the recessed surface portion 118 will be described with reference to FIG. 13. As schematically shown in FIG. 13, for example, after the coating is cured during drawing of an optical fiber preform, an optical fiber G1 having an oval cross-section is formed by temporarily irradiating an optical fiber G1 with ultraviolet light and pressing the optical fiber G1 using a pressing member T. Furthermore, an optical fiber G3, in the cross-section of which the recessed surface portion 118 is formed, is obtained by irradiating the optical fiber G2 with ultraviolet light and cutting the optical fiber G2 using a cutter V. Incidentally, as shown in FIGS. 12 and 13, when the pressing member T presses the optical fiber G1 during drawing, the resin coating layer (the primary resin layer 114, the secondary resin layer 115, and the colored resin layer 116) is deformed; however, the glass fiber (the cores 111, the cladding 112, and the marker 113) is not deformed.

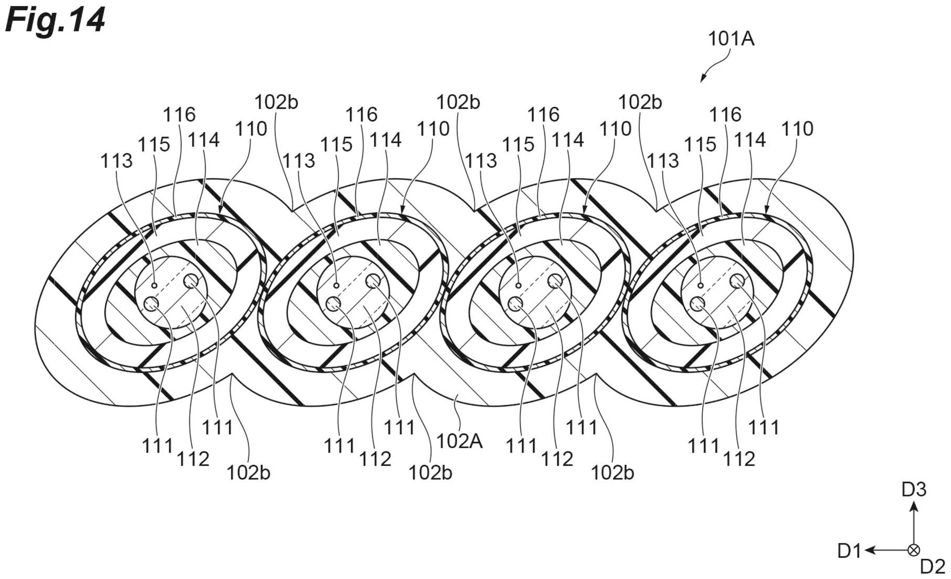

FIG. 14 is a cross-sectional view showing an optical fiber ribbon 101A according to the seventh modification example. As shown in FIG. 14, a ribbon material 102A of the optical fiber ribbon 101A includes a plurality of recesses 102b aligned in the first direction D1 and extending along the second direction D2. In the optical fiber ribbon 101A including the ribbon material 102A, the optical fibers 110 can be easily separated (for example, separated into individual fibers) along the recesses 102b.

The embodiment and various modification examples according to the present disclosure have been described above. However, the present invention is not limited to the embodiment or the various modification examples described above, and can be changed as appropriate within the scope of the concept described in the claims. In addition, the optical fiber ribbon according to the present disclosure may be a combination of a plurality of examples from among the embodiment and the various modification examples described above. For example, the configuration, shape, size, material, number, and disposition mode of each portion of the optical fiber ribbon according to the present disclosure can be changed as appropriate within the scope of the concept.

**Reference Signs List**

1, 1A, 1B, 1C, 101, 101A: optical fiber ribbon, 2, 2A, 102, 102A: ribbon material, 2b, 102b: recess, 10, 10A, 110, 110A, 110B: optical fiber, 110b: major axis, 110c: minor axis, 11, 111: core, 11b, 111b: first core, 11c, 111c: second core, 12, 112: cladding, 13, 113: marker, 14, 114: primary resin layer, 15, 115: secondary resin layer, 16, 116: colored resin layer, 17, 18, 117, 118: recessed surface portion, 20: manufacturing apparatus, 21: supply device, 22: guide roller, 22b: first guide roller, 22c: second guide roller, 22d: third guide roller, 22f: extending portion, 22g: bottom portion, 22h: blade portion, 23: pressure roller, 25: coating device, D1: first direction, D2: second direction, G1, G2, G3: optical fiber, P1: connecting portion, P2: non-connecting portion, S: extension plane, T: pressing member, V: cutter.

**Claims**

1. An optical fiber ribbon, comprising:

    a plurality of optical fibers aligned along a first direction and extending along a second direction intersecting the first direction; and
    a ribbon material that covers the plurality of optical fibers,
    wherein, in a cross-section orthogonal to the second direction, each of the optical fibers includes a recessed surface portion that is recessed with respect to an imaginary extension plane extending along an outer peripheral surface of the optical fiber.

2. The optical fiber ribbon according to claim 1,

    wherein the optical fiber includes a primary resin layer and a secondary resin layer that covers the primary resin layer, and
    the recessed surface portion is formed in the secondary resin layer.

3. The optical fiber ribbon according to claim 2,

    wherein the optical fiber includes a colored resin layer that covers the secondary resin layer, and
    the recessed surface portion is formed in the colored resin layer and the secondary resin layer.

4. The optical fiber ribbon according to claim 1 or 2,

    wherein, in the cross-section, an outer shape of the optical fiber which includes the extension plane is a circular shape, and
    when the number of the optical fibers is N, a diameter of a circular portion of the optical fiber in the cross-section is A1, and a length of the optical fiber ribbon in the first direction in the cross-section is W1 (N, A1, and W1 are positive real numbers),

0.90 x N x A1 ≤ W1 ≤ 1.20 x N x A1 is satisfied.

5. The optical fiber ribbon according to claim 1 or 2, wherein the optical fiber is a multicore fiber.

6. The optical fiber ribbon according to claim 1 or 2,

wherein the plurality of optical fibers are in contact with each other,
in the cross-section orthogonal to the second direction, the optical fiber has an oval shape, and
in the cross-section, an angle of a major axis of each of the optical fibers with respect to the first direction is equal to or greater than 0° and less than 90°.

7. The optical fiber ribbon according to claim 1 or 2, when the number of the optical fibers is N, a maximum value of a diameter of the optical fiber in the cross-section is A2, and a length of the optical fiber ribbon in the first direction in the cross-section is W2 (N, A2, and W2 are positive real numbers),

[Equation 1]

$$\left(\frac{\sqrt{3}}{2}\right) \times N \times A2 \leq W2 \leq 1.2 \times N \times A2$$

is satisfied.

**Fig.1**

EP 4 703 782 A1

Fig.2

# Fig.3

# Fig.4

**Fig.5**

# Fig.6

*Fig.7*

## Fig.8

Fig.9

# Fig.10

A2

110

110c

110b

B2

111
(111c)

116

115

114

112

113

111
(111b)

D3

D1 ⊗ D2

Fig.11

Fig.12

Fig.13

EP 4 703 782 A1

**Fig.14**

EP 4 703 782 A1

## INTERNATIONAL SEARCH REPORT

| International application No. |
|---|
| **PCT/JP2024/013974** |

| A. | CLASSIFICATION OF SUBJECT MATTER |
|---|---|

*G02B 6/44*(2006.01)i
FI: G02B6/44 371

According to International Patent Classification (IPC) or to both national classification and IPC

| B. | FIELDS SEARCHED |
|---|---|

Minimum documentation searched (classification system followed by classification symbols)

G02B6/02-6/036; G02B6/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-76633 A (FUJIKURA LTD.) 20 May 2021 (2021-05-20) paragraphs [0019]-[0031], [0063], fig. 1, 2, 6 | 1-3, 5 |
| Y | | 4, 6-7 |
| Y | WO 2017/145955 A1 (SUMITOMO ELECTRIC INDUSTRIES, LTD.) 31 August 2017 (2017-08-31) paragraph [0059], fig. 1 | 4, 7 |
| Y | WO 2018/105424 A1 (SUMITOMO ELECTRIC INDUSTRIES, LTD.) 14 June 2018 (2018-06-14) paragraph [0066], fig. 1, 2 | 4, 7 |
| Y | JP 2002-341208 A (SUMITOMO ELECTRIC INDUSTRIES, LTD.) 27 November 2002 (2002-11-27) paragraph [0019], fig. 1 | 4, 7 |
| Y | WO 2018/150867 A1 (FUJIKURA LTD.) 23 August 2018 (2018-08-23) paragraphs [0111]-[0114], fig. 43 | 6 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/013974** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2013-160800 A (SUMITOMO ELECTRIC INDUSTRIES, LTD.) 19 August 2013 (2013-08-19)<br>entire text, all drawings | 1-7 |
| A | US 2016/0223774 A1 (CORNING CABLE SYSTEMS, LLC) 04 August 2016 (2016-08-04)<br>entire text, all drawings | 1-7 |
| A | US 2013/0322835 A1 (BUTLER, D. L. et al.) 05 December 2013 (2013-12-05)<br>entire text, all drawings | 1-7 |

Form PCT/ISA/210 (second sheet) (July 2022)

## INTERNATIONAL SEARCH REPORT
### Information on patent family members

International application No.

**PCT/JP2024/013974**

| Patent document cited in search report | | | Publication date (day/month/year) | Patent family member(s) | | | Publication date (day/month/year) |
|---|---|---|---|---|---|---|---|
| JP | 2021-76633 | A | 20 May 2021 | (Family: none) | | | |
| WO | 2017/145955 | A1 | 31 August 2017 | US | 2019/0204519 | A1 | |
| | | | | paragraph [0093], fig. 1 | | | |
| | | | | EP | 3422062 | A1 | |
| | | | | AU | 2017224629 | A1 | |
| | | | | CN | 108474921 | A | |
| | | | | TW | 201802512 | A | |
| WO | 2018/105424 | A1 | 14 June 2018 | US | 2020/0064550 | A1 | |
| | | | | paragraph [0144], fig. 1, 2 | | | |
| | | | | EP | 3553578 | A1 | |
| | | | | CN | 110036325 | A | |
| JP | 2002-341208 | A | 27 November 2002 | (Family: none) | | | |
| WO | 2018/150867 | A1 | 23 August 2018 | (Family: none) | | | |
| JP | 2013-160800 | A | 19 August 2013 | US | 2015/0016791 | A1 | |
| | | | | WO | 2013/114770 | A1 | |
| | | | | EP | 2811325 | A1 | |
| | | | | CN | 104081234 | A | |
| US | 2016/0223774 | A1 | 04 August 2016 | WO | 2015/126470 | A2 | |
| | | | | EP | 3072001 | A2 | |
| | | | | CN | 105899981 | A | |
| US | 2013/0322835 | A1 | 05 December 2013 | WO | 2014/042714 | A2 | |
| | | | | EP | 2856224 | A2 | |
| | | | | CN | 104620146 | A | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023070611 A
- JP 2023070628 A
- JP 2021076633 A
- JP 2017173514 A
- JP 2013160800 A
- JP 2015052704 A